# EUROPÄISCHE PATENTSCHRIFT

(11) **EP 3 154 877 B1**
(45) Veröffentlichungstag und Bekanntmachung des Hinweises auf die Patenterteilung: **11.09.2019**
(21) Anmeldenummer: 15736407.6
(22) Anmeldetag: 16.06.2015
(51) Int. Cl.: B65G 1/04, B65G 1/06

(54) **LAGERSYSTEM**
STORAGE SYSTEM
SYSTÈME DE STOCKAGE

(30) Priorität: 16.06.2014 DE 102014108453
(43) Veröffentlichungstag der Anmeldung: 19.04.2017
(73) Patentinhaber: Hansl, Rudolf, 4020 Linz (AT)
(72) Erfinder: Hansl, Rudolf, 4020 Linz (AT)
(74) Vertreter: OlbrichtPfister
(86) Internationale Anmeldenummer: PCT/EP2015/063499
(87) Internationale Veröffentlichungsnummer: WO 2015/193330

(56) Entgegenhaltungen:
- EP-A1- 0 100 867
- WO-A1-2005/118436
- DE-A1- 19 848 274
- US-A1- 2009 074 545

## Beschreibung

Die Erfindung betrifft ein Lagersystem, umfassend zumindest eine Station, wie eine Wareneinlagerungs-, Warenumlagerungs-, Warenkommissionierungs- oder Warenauslagerungsstation und ein Regallager, mit einer Vielzahl von nebeneinander und/oder übereinander angeordneten Lagerplätzen für die Lagerung von Waren, wobei das Lagersystem mindestens ein Warentransportfahrzeug umfasst.

In den vergangenen Jahren haben sich die gattungsgemäßen Lagersystem von einfachen Lagerhäusern mit hohem Personalaufwand für das Bereitstellen und Kommissionieren der im Regallager gelagerten Waren zu hochkomplexen, weitestgehend automatisierten Lagersystemen entwickelt, bei welchen ein Regallager über eine Kette von unterschiedlichen Fördersystemen, wie zum Beispiel einem Regalbediengerät, einem Flurförderfahrzeug, und Transportanlagen wie zum Beispiel Rollenbahnen oder Transportbänder mit einer Station verbunden ist.

Im Zuge der dynamischen E-Commerce-Entwicklung nahmen die Anforderungen an die Leistungsfähigkeit im Bereich der Kommissionierung wie auch die Artikelanzahl pro Auftrag bei den gattungsgemäßen Lagersystemen erheblich zu, weswegen die bekannten Lagersysteme im Bezug auf den Transport der Güter sehr schnell an die Grenzen ihrer Leistungsfähigkeit gelangen und dann ineffizient werden. Diese mangelnde Flexibilität der bekannten Lagersysteme im Bezug auf Arbeitsspitzen geht einher mit einem hohen technischen Aufwand für die verschiedenen Fördersysteme, deren Abstimmung und den damit verbundenen Kosten, und der hieraus resultierenden geringen Kosteneffizienz US 2009/0074545 A1 beschreibt ein Lagersystem nach dem Oberbegriff des Anspruchs 1.

Es ist daher Aufgabe der vorliegenden Erfindung ein Lagersystem vorzuschlagen, das eine bessere Effizienz aufweist.

Zur Lösung dieser Aufgabe geht die Erfindung aus von einem Lagersystem wie eingangs beschrieben, welches sich durch die Merkmale des Anspruchs 1 auszeichnet, wobei mindestens eine Ware von der Station zu dem Lagerplatz oder umgekehrt transportiert wird und der Transport ohne ein Umladen der Ware auf ein anderes Warentransportfahrzeug oder ein anderes Transportmittel erfolgt, wobei Station und Regallager nebeneinander angeordnet sind und sich das Warentransportfahrzeug für den Transport der Ware sowohl im, insbesondere im wesentlich horizontal orientierten Bereich zwischen der Station und dem Regallager, wie auch im Regallager, hier insbesondere auch schräg oder vertikal bewegt und das Warentransportfahrzeug mit einem Fördermittel, wie zum Beispiel einem durch einen Antrieb antreibbare/s Transportband oder Rollenbahn, für das Ein- oder Ausfördern der auf dem Warentransportfahrzeug vorgesehenen oder vorsehbaren Ware ausgestattet ist und die Ware während des Transports auf dem Fördermittel verbleibt und an mindestens einem Lagerplatz des Regallagers oder einer Station ein Fördermittel, wie zum Beispiel einen Transportband oder eine Rollenbahn vorgesehen ist und das Warentransportfahrzeug mit einem Energieabtriebsmittel oder Übertrieb, zum Beispiel einem Stecker, einer Abtriebswelle oder einem Abtriebsrad bzw. Abtriebszahnrad ausgestattet ist, das in Wirkverbindung mit einem Energieanschlusspunkt am Fördermittel des Lagerplatzes oder der Station in Wirkverbindung bringbar ist, und welcher insbesondere mit dem Antrieb oder der Energiequelle des Fördermittels des Warentransportfahrzeugs angetrieben ist.

Der Hauptvorteil des erfindungsgemäßen Vorschlages kommt daher, dass der erfindungsgemäße Ansatz auf eine Vielzahl unterschiedlicher Transportsysteme, wie dies im Stand der Technik bekannt ist, bewusst verzichtet und den Transport der Ware/n mit nur einer Gattung von Transportmitteln, dem beschriebenen Warentransportfahrzeugen durchführt. Da die gesamte Transportaufgabe durch eine, in sich wiederum autarken, Transportsystem, den beschriebenen Warentransportfahrzeugen erfolgt, müssen im Betrieb keine aufwändige Abstimmungen zwischen den einzelnen Transportsystemen bzw. Transportgattungen vorgenommen werden.

Ein weiterer Hauptaspekt des erfindungsgemäßen Lösungsvorschlages ist darin zu sehen, dass auf eine aufwändige Hebetechnik am Lagerplatz oder der Station oder einem Regalbediengerät im Regallager bewusst verzichtet wird. Die Warentransportfahrzeugs sind mit einem Energieabtriebsmittel oder Übertrieb, wie beschrieben, ausgestattet und treiben entweder durch ihren eigenen Antrieb (gegebenenfalls mit einer Kupplung ausgestattet) oder unter Ausnutzung der von dem Warentransportfahrzeugs mitgeführten Energiequelle (zum Beispiel eine Batterie) das am Lagerplatz oder der Station vorgesehene Fördermittel an. Zum einem ist ein solch einfach ausgestattetes Regallager einfach erweiterbar und insbesondere auch in seiner Leistungsfähigkeit skalierbar, zum anderen wird auch auf sensitive Technik der in Regallagern bekannten Hebegeräte, die die Ware von dem Warentransportfahrzeugs auf den Lagerplatz bzw. Station stellen oder abheben, verzichtet. Dabei sieht die Erfindung insbesondere vor, dass die wartungsrelevanten Elemente auf dem Warentransportfahrzeugs angeordnet sind, die regelmäßig zwischen den Stationen und dem Regallager hin und her fahren und bei Bedarf dann auch für Wartungszwecke ausgeschleust (diese haben zum Beispiel eine Eigendiagnostik-Modul an Bord) werden können.

Ein zusätzlicher Vorteil des erfindungsgemäßen Vorschlages ist, dass dieser auch Platz spart, da die im Stand der Technik notwendigen Umschlagplätze zwischen den einzelnen Transportsystemen eingespart werden.

Nebenbei spart der Verzicht auf ein Umladen der Ware zwischen verschiedenen Transportsystemen auch Zeit d. h. der Transport erfolgt letztendlich schneller, das Lagersystem nach der Erfindung ist auch daher effizienter.

Der Einsatz der erfindungsgemäß vorgeschlagenen Warentransportfahrzeuge als (einzige) Transportgattung macht das erfindungsgemäße Lagersystem hoch flexibel und somit auch effektiv. Für den Betrieb, also die Fahrt der Warentransportfahrzeuge wird letztendlich nur ein (beliebig ausgestaltbares) Leitsystem benötigt, welches dafür sorgt, dass das Warentransportfahrzeug von der Station zu den Lagerplätzen (und zurück) gelangt. Insbesondere ist das bei dem erfindungsgemäßen Lagersystem vorgesehene Regallager so ausgestaltet, dass das Warentransportfahrzeug sich in diesem auch bewegen kann, was durch eine entsprechende Ausstattung des Regallagers (geneigte Transportstrecken oder vertikal verlaufende Transportstrecken) erreicht wird.

Der erfindungsgemäße Vorschlag kombiniert eine technisch effektive Lösung mit hoher kaufmännischer Effizienz.

Da nach dem erfindungsgemäßen Ansatz vorzugsweise eine Vielzahl von Warentransportfahrzeugen eingesetzt wird, bei welchen ein Umladen der Waren zwischen Station und Lagerplatz nicht notwendig ist, ist die Vergrößerung eines solchen Lagersystems einfach und flexibel möglich. Zunächst wird natürlich bei Vergrößerung des Lagersystems die Lagerfläche, also das Regallager vergrößert. Dies geht einher mit einer Vergrößerung der Transportstrecken für die Warentransportfahrzeuge, da jeder Lagerplatz von dem Warentransportfahrzeug angefahren werden kann. Letztendlich ist hierzu nur das Leitsystem anzupassen.

Dies wird insbesondere dann deutlich, wenn man das Resultat einer Vergrößerung eines Lagersystems (also des Regallagers) nach dem Stand der Technik (bei welchen z. B. ein Regalbediengerät eingesetzt wird) mit dem Vorschlag nach der Erfindung vergleicht.

Bei beiden Varianten wird das Regallager vergrößert. Bei der Vorschlag nach dem Stand der Technik kann zum Beispiel das Schienensystem, auf welchem das Regalbediengerät verfährt, verlängert werden, damit das eine Regalbediengerät auch das größere Regallager bedienen kann. Es wird bereits an dieser Stelle klar, dass das Regalbediengerät bezüglich seiner Leistungsfähigkeit nicht in der gleichen Weise skalierbar ist wie die Vergrößerung des Regallagers. Zwar kann auf das bestehende Schienensystem des (ersten) Regalbediengerät ein zweites Regalbediengerät auf- und eingesetzt werden, wodurch die Leistungsfähigkeit wieder gesteigert wird. Allerdings sind diese beiden Systeme nicht so leistungsfähig wie zwei voneinander getrennte Systeme, da die beiden Regalbediengeräte nicht unabhängig voneinander verwendet werden können. Die Probleme gehen bei einer Vergrößerung des Lagers nach dem Stand der Technik weiter: Der erste Umschlagplatz, bei welchem die Ware von dem Regalbediengerät zum Beispiel auf einem Flurförderfahrzeuge umgesetzt wird, muss so geändert werden, dass dort zwei Regalbediengeräte Waren anliefern können.

Bei dem erfindungsgemäßen Vorschlag erfährt das Regallager in gleicher Weise eine Vergrößerung. Das Warentransportfahrzeug ist so ausgestaltet, dass dieses sowohl in der Fläche, also zwischen dem Regallager und der Station, wie auch im Regallager selber (in die Höhe oder schräg) verfahren kann. Die Expansion des Regallagers geht einher mit der Randbedingung, dass jeder Lagerplatz durch das Warentransportfahrzeug erreicht, also angefahren werden kann. Da die Warentransportfahrzeuge jeweils unabhängig voneinander fahren und Waren transportieren, ist eine Expansion nach der Erfindung problemlos möglich, die höhere Lagerkapazitäten geht einher mit einer entsprechenden höheren Transportleistung durch eine größere Anzahl von Warentransportfahrzeugen.

Erfindungsgemäß wird vorgeschlagen, dass zumindest eine Station und das Regallager nebeneinander angeordnet sind. Nebeneinander bedeutet hierbei nicht beschränkend in einer Ebene horizontal nebeneinander, sondern kann gleichwohl auch vertikal nebeneinander, also auch übereinander, versetzt zueinander, oder auch jede andere Relativposition zueinander bedeuten.

Des Weiteren wird bemerkt, dass die Leistungsfähigkeit des Transportsystems nach der Erfindung auf die tatsächlichen Bedürfnisse des Lagersystems jederzeit skalierbar ist. Diese Flexibilität ist nach dem Stand der Technik nicht gegeben, da dort immer beide Regalbediengeräte bewegt werden müssen, um Ware ein- und auszulagern. Wird eine geringere Umschlagszahl bei dem Vorschlag nach der Erfindung benötigt, wird einfach automatisch die Anzahl der eingesetzten Warentransportfahrzeuge reduziert und dem tatsächlichen Bedarf angepasst. Dieser flexible Ansatz ist nachhaltig und spart Ressourcen.

Es wird in gleicher Weise auch ein Verfahren für die Errichtung, oder das Erweitern eines Lagersystems beschrieben, wie dieses insbesondere in dieser Anmeldung beschrieben ist, wobei das Lagersystem zumindest eine Station, wie eine Wareneinlagerungs-, Warenumlagerung- oder Warenauslagerungsstation und ein Regallager mit einer Vielzahl von nebeneinander und/oder übereinander angeordneten Lagerplätzen für die Lagerung von Waren, sowie eine Lagersteuerung umfasst und zumindest auf einem Teil der Transportstrecke zwischen der Station und dem Lagerplatz Transportstreckenelemente mit individuellen Transportstreckenelement-Identifikationsmitteln hintereinander angeordnet werden, und in die Lagersteuerung des Lagersystems die Anordnung der einzelnen Transportstreckenelemente zueinander bzw. hintereinander mittels Erfassen der auf jedem Transportstreckenelement angeordneten eindeutigen Transportstreckenelemente-Identifikationsmittel eingeprägt werden, und somit in der Lagersteuerung ein Wegeplan mit Wegidentifikationsmittel zur Verfügung steht.

Wie oben beschrieben wurde ist der konstruktive Aufwand für eine Vergrößerung des Lagersystems bzw. des Regallagers nicht mit einer erheblichen Erhöhung der Komplexität der Transportsysteme verbunden. Den eingesetzten Warentransportfahrzeugen ist es einerlei, ob sie ein kleineres oder größeres Regallager befahren.

Das Verfahren umfasst dabei sowohl das initiale Errichten eines Lagersystems, wie auch das nachfolgende Erweitern eines bestehenden Lagersystems. Die Abläufe sind letztendlich identisch, da sich die geometrische Zuordnung der einzelnen Lagerplätze zueinander verändern. Eine solche einfache Erweiterung des Lagersystems ist nach den oben dargestellten Vorschlägen zum Stand der Technik unmöglich.

In einem einfachen Einscann-Vorgang wird das initial bestehende oder dann erweiterte Transportstreckennetz erfasst und von der Lagersteuerung gelernt. Dabei ist der Einscann-Vorgang so durchzuführen, dass tatsächlich die nebeneinanderliegenden Transportstreckenelemente mit ihren Transportstreckenelement-Identifikationsmittel in der ausgelegten Reihenfolge eingescannt werden, da aus dieser Relativinformation dann der Wegeplan von der Lagersteuerung erstellt wird.

Das erfindungsgemäß vorgeschlagene Lagersystem hat insbesondere den Vorteil, dass bei der Vergrößerung des Regallagers auch gleichzeitig die Transportstrecke im Regallager vergrößert wird was automatisch zur Aufnahme einer größeren Anzahl einander in der Regel nicht behindernden Warentransportfahrzeugen dient. Da die Warentransportfahrzeuge untereinander autark d. h. unabhängig bewegt werden, ist durch eine größere oder kleinere Anzahl vom im Lagersystem eingesetzten Warentransportfahrzeuge die Transportkapazität und damit auch die notwendige Umschlagzahl den Bedürfnissen anpassbar oder skalierbar.

Bekanntermaßen ist die Kette von Transportsystemen nach dem Stand der Technik auch anfällig, da die Transportgattung mit der geringsten Leistungsfähigkeit oder der geringsten Verfügbarkeit die gesamte Leistungsfähigkeit vorgibt. Im schlimmsten Fall kann z. B. der Ausfall des (vielleicht einzigen) Regalbediengerätes das gesamte Lagersystem nach dem Stand der Technik lahm legen. Der Ausfall eines (vielfach redundanten) Warentransportfahrzeuges nach der Erfindung allerdings führt zu einer nicht merklichen Leistungsschwankung, da das Lagersystem das schadhafte Warentransportfahrzeug (unter Umständen bereits frühzeitig) erkennt und aus dem Betrieb aussortiert und durch ein neues, fahrtüchtiges Warentransportfahrzeug ersetzt.

Die Ausgestaltung der Leitsysteme ist gemäß der Erfindung sehr variabel. Das Leitsystem ist zum Beispiel als konstruktiv sichtbares Element ausgeführt, wie es zum Beispiel weiteren Verlauf als Transportstrecke oder Transportstreckenelement beschrieben ist. Zugleich stellt ein solches Element eine kostengünstige Variante für die Realisierung des Leitsystems dar. Das Leitsystem kann aber auch als auf Funkbasis aufgebautes Navigationssystem gebildet sein, bei welchen eine Anzahl von Sendestationen im Lagersystem verteilt werden und eine Ortung, Orientierung bzw. Führung der Warentransportfahrzeuge erlaubt. In einer weiteren Variante des Leitsystems ist zum Beispiel eine Leitspur am Boden aufgebracht, die mit entsprechenden Weg-Identifikationsmittel ausgestattet ist, um den Warentransportfahrzeugen eine Orientierung und Führung zu ermöglichen.

Erfindungsgemäß ist vorgesehen, dass das Regallager, neben mindestens einer im Wesentlichen horizontal orientierten Transportstrecke auch mindestens eine geneigte oder vertikal verlaufende Transportstrecke aufweist, und das Warentransportfahrzeug die Transportstrecke befährt. Das Regallager ist so ausgestaltet, dass das Warentransportfahrzeug, von der Station kommend, direkt in das Regallager einfahren und in diesem unterschiedliche Stockwerke oder Niveaus gelangen kann, um auch die oben liegenden Lagerplätze zu erreichen.

Bei einer bevorzugten Ausgestaltung des Vorschlags ist vorgesehen, dass das Lagersystem über eine Lagersteuerung verfügt, welche mit einem Lagerplatzmodul, welches am Lagerplatz angeordnet ist und/oder einen Warentransportfahrzeug-Steuerungsmodul, welches am Warentransportfahrzeug angeordnet ist und/oder einem Transportstreckenelement-Modul, welches am Transportstreckenelement angeordnet ist, bevorzugt drahtlos, zum Beispiel über Funk, WLAN oder Bluetooth Informationen austauscht. Der erfindungsgemäße Vorschlag ist sehr variabel. In der einfachsten Variante reicht es bereits aus, dass die Lagersteuerung des Lagersystems nur mit dem/den Lagerplatzmodul/en (oder nur den Warentransportfahrzeug-Steuerungsmodul/en oder nur den Transportstreckenelement-Modul/en) Daten austauscht. Vorteilhafterweise ist dabei jeder Lagerplatz mit einem solchen Lagerplatzmodul ausgestattet. In komplexeren oder komfortableren Ausstattungen kommuniziert die Lagersteuerung mit mehreren, unterschiedlichen Modulen, so zum Beispiel mit dem Lagerplatzmodul (jedes Lagerplatzes), mit dem Warentransportfahrzeug-Steuerungsmodul (jedes Warentransportfahrzeuges) und den Transportstreckenelement-Modul (jedes Transportstreckenelementes).

Als Modul bzw. Modulelement im Sinne dieser Anmeldung wird eine Funktionsgruppe einer Schaltung bzw. Steuerung oder Steuerschaltung verstanden, die nicht zwingenderweise als abgegrenztes, separates Bauteil oder Schaltungsteil ausgebildet sein muss. Vielmehr wird durch den gewählten Begriff beschrieben, dass das Modul bzw. Modulelement einzeln oder in Kombination mit anderen Modulen bzw. Modulelementen in der jeweiligen Schaltung, Steuerung oder Steuerschaltung realisierbar ist. Aufgrund der funktionalen Beschreibung des Moduls bzw. Modulelemente ist dem Fachmann klar, wie das Modul bzw. Modulelement auszubilden und zu gestalten ist. Das vorgeschlagene Modul bzw. Modulelement ist dabei zum Beispiel auch als Softwareanweisungen in der Steuerung hinterlegbar.

Des Weiteren ist vorgesehen, dass die Lagersteuerung mindestens eines der nachfolgenden Modulelemente aufweist:
- Modulelement, das der richtigen, bzw. optimierten Reihenfolge mehrerer Warentransportfahrzeuge dient, die mindestens eine Ware für eine gemeinsame Sendung zu einer Station transportieren.
- Modulelement, für die Realisierung von Eilaufträgen.
- Ein Optimierungsmodul als Modulelement, welches die Reihenfolge der Waren, die in eine Station nacheinander auf Warentransportfahrzeuge einfahren, unter Ausnutzung von Umladevorgängen der Ware an anderen Stationen und/oder dem Anhalten eines Warentransportfahrzeuges in einem Überhol- und/oder Rangierbereich optimiert, wobei das Optimierungsmodul zumindest teilweise zentral in der Lagersteuerung und/oder zumindest teilweise dezentral in den jeweiligen Warentransportfahrzeug-Steuerungsmodul der Warentransportfahrzeuge vorgesehen ist.

Mit dem vorgenannt ersten Modulelement wird die Kommissionierung von Sendungen, die mehr als nur ein Artikel umfasst, deutlich erleichtert. Es wird dabei angestrebt, dass die Warentransportfahrzeuge die Waren für einen Sendungsvorgang transportieren, kurz vor der Station gesammelt werden und dann gleichzeitig oder hintereinander in kurzem Abstand in die Station einfahren, damit bei der Kommissionierung möglichst alle benötigten Waren der Sendung gleichzeitig verfügbar sind.

Bei Bestellvorgängen werden Eilaufträge oftmals zusätzlich vergütet. Da solche Aufträge dann bevorzugt abgearbeitet werden müssen, wird das zweite Modulelement vorgeschlagen, das für die Realisierung von Eilaufträgen ausgestattet ist. Dies wird zum Beispiel so ausgeführt, dass ein solcher Eilauftrag auf speziellen Warentransportfahrzeugen realisiert wird, die sich bevorzugt im Lagersystem bewegen können. So können hierzu zum Beispiel reservierte Transportstrecken oder Trassen vorgesehen werden oder aber, ähnlich wie bei der Polizei oder Feuerwehr, müssen andere Warentransportfahrzeuge freie Fahrt geben, also die Transportstrecke räumen, wenn ein diese eiligen Auftrag ausführende Warentransportfahrzeug gerade unterwegs ist. So etwas wird wie folgt realisiert: die Lagersteuerung weiß, auf welchen Streckenabschnitt der Transportstrecke das Warentransportfahrzeug für den eiligen Auftrag unterwegs ist. Dieser Streckenabschnitt wird zum Beispiel durch zwei Wegidentifikationsmittel begrenzt. Die Lagersteuerung weiß auch, welche weiteren Warentransportfahrzeuge sich in diesem Streckenabschnitt befinden und diese normal fahrenden Warentransportfahrzeuge werden dann auf Seitenrouten ausgeschleust, oder in Parkbereich oder in anderen Räumen manövriert und so dem Eilauftrag freie Fahrt gewährt.

Das ebenfalls optional, vorteilhafterweise vorgesehene Optimierungsmodul entfaltet seine Vorteile gerade bei der maschinenbaulich vorgeschlagenen Ausgestaltung des Vorschlages. Da das Warentransportfahrzeuge selber ein Fördermittel mitführt kann das Warentransportfahrzeuge selber entscheiden, wann ein Umladen oder Optimieren günstig ist und sich dann zum Beispiel einen freien Lagerplatz oder Station suchen, um die gewünschte Sortierung und Reihenfolge herzustellen. Da das Warentransportfahrzeug die Ware selber ab- und wieder aufladen kann, ist dies variabel ausführbar. Bei dieser Variante kann zum Beispiel die Reihenfolge der Waren auch auf dem Warentransportfahrzeuge verändert werden, der erfindungsgemäße Vorschlag umfasst aber auch die Lösung, bei welchen das Warentransportfahrzeuge im Rangierbereich wartet, bis es, in Abstimmung mit anderen Warentransportfahrzeuge in der richtigen Reihenfolge, in der richtigen Sequenz, in die Station zur weiteren Kommissionierung einfährt. Geschickterweise ist dabei dieses Optimierungsmodul entweder zumindest ein Teil der (zum Beispiel zentral) ausgeführten Lagersteuerung und oder es ist zumindest teilweise dezentral in den jeweiligen Warentransportfahrzeug-Steuerungsmodule der Warentransportfahrzeuge vorgesehen. Daher ist das Optimierungsmodul sowohl eine vorteilhafte Verbesserung der Lagersteuerung wie optional auch eine optionale Verbesserung der Warentransportfahrzeug-Steuerungsmodul.

In einer vorteilhaften Ausgestaltung ist vorgesehen, dass die Transportstrecke modulartig aus einer Mehrzahl, hintereinander angeordneten, bevorzugt flächig ausgebildeten Transportstreckenelementen gebildet ist, wobei das Transportstreckenelement insbesondere mindestens eine, das Warentransportfahrzeug führende Schiene aufweist. Dies ist ein Beispiel für die Ausgestaltung des oben beschriebenen Leitsystems.

Geschickter Weise ist vorgesehen, dass jedes Transportstreckenelement mit einem individuellen Transportstreckenelement-Identifikationsmittel ausgestattet ist, das auch als Wegidentifikationsmittel dient. Die Ausstattung jedes Transportstreckenelement mit einem individuellen Transportstreckenelement-Identifikationsmittel erlaubt es, jedes Transportstreckenelement individuell anzusprechen. In dem Verfahren wird beschrieben, wie in einfacher Weise das Lagersystem aufgebaut und von der Lagersteuerung gelernt wird. Zunächst dient das Transportstreckenelement-Identifikationsmittel als eindeutiges Identifikationsmittel des Transportstreckenelementes, wenn dieses verbaut wird. Ist dieses aber dann ausgelegt gewinnt das Transportstreckenelement-Identifikationsmittel eine zusätzliche Funktion, es wird nämlich zum Wegidentifikationsmittel, und somit zum Teil des Wegenetzes bzw. Streckenplanes oder Wegeplanes, der datentechnisch in der Lagersteuerung hinterlegt ist.

In einer weiteren bevorzugten Ausführungsform ist vorgesehen, dass das Transportstreckenelement mit einem Transportsteckenelement-Modul ausgestattet ist, das mindestens eines der nachfolgenden Modulelemente umfasst:
- Modulelement, welches eine drahtlose Datenverbindung zur Lagersteuerung unterhält.
- Modulelement, welches eine Warentransportfahrzeug-Erkennungsvorrichtung umfasst, die zum Erfassen von auf dem Warentransportfahrzeug angeordneten Warentransportfahrzeug-Identifikationsmittel dient.

Das letztere Modulelement erlaubt es festzustellen, wo, also bei welchem Transportstreckenelement, welches Warentransportfahrzeug gerade ist. Somit kann ein Warentransportfahrzeug im Lagersystem nicht verloren gehen und sein aktueller Ort ist verfügbar.

Des Weiteren ist günstiger Weise vorgesehen, dass eine, insbesondere geneigte oder vertikal verlaufende Transportstrecke bzw. Transportstreckenelement mit einer reibungserhöhenden Oberfläche ausgestattet ist und/oder Bereiche mit Verbindungselementen aufweist, die formschlüssig mit mindestens einem Antriebselement des Warentransportfahrzeuges zusammenwirkt. Als formschlüssig wirkendes Element ist zum Beispiel eine Zahnstange oder Ähnliches vorgesehen. Mithilfe eines solchen Elementes können auch große Steigungen oder vertikale Transportstreckenbereiche durch das Warentransportfahrzeug sicher und zuverlässig überwunden werden.

Vorteilhafter Weise ist vorgesehen, dass die Transportstrecke mindestens einen Überhol- und/oder Rangierbereich aufweist, um die Reihenfolge der in eine Station einfahrende Reihe von Warentransportfahrzeugen zu verändern oder zu optimieren. Bei einem Liefervorgang für eine Sendung sind zum Beispiel fünf Waren aus dem Lagersystem zusammen zu holen, wofür vier Warentransportfahrzeuge eingesetzt werden. Auf einem dieser Warentransportfahrzeuge werden dabei zwei unterschiedliche Waren (aus unterschiedlichen Lagerplätzen im Lagersystem) transportiert, wobei auf den anderen Warentransportfahrzeuge je mindestens ein, gegebenenfalls aber auch mehrere Waren gleicher Gattung transportiert werden. Da die Warentransportfahrzeuge unter Umständen zu unterschiedlichen Zeitpunkten die Waren für diesen Sendungsauftrag aus dem Regallager holen, treffen diese auch zu unterschiedlichen Zeitpunkten an der Warenkommissionierungs-Station ein. Das ist ungünstig, weil dann dort in der Station die Waren gesammelt und geparkt werden müssen. Es ist daher vorgesehen ein Überhol- und/oder Rangierbereich vorgesehen, in welchen die Warentransportfahrzeuge, die Waren für eine Sendung tragen, gesammelt werden und dieser Zug von Warentransportfahrzeugen fährt dann gemeinsam in die Station ein, wenn die Waren der Sendung komplett sind.

In einer weiteren bevorzugten Ausgestaltung ist dabei vorgesehen, dass ein automatisches Umladen der Waren in der ebenfalls als Station beschriebenen Überhol- und/oder Rangierbereich vorgesehen ist, was zum einen den Kommissionierungsvorgang beschleunigt und zum anderen die Effizienz steigert, da dann die freiwerdenden Warentransportfahrzeuge neue Transportaufgaben übernehmen können.

Des Weiteren ist in dem Vorschlag vorteilhafter Weise vorgesehen, dass die Transportstrecke mindestens einen Parkbereich aufweist, in welchen im Moment nicht benötigte oder einsetzbare Warentransportfahrzeuge parkbar sind.

Bei einer bevorzugten Ausgestaltung des Vorschlags ist vorgesehen, dass das Transportstreckenelement als Segment einer Spirale ausgebildet ist. Durch die Hintereinanderanordnung solcher Spiralsegmente entsteht eine Spirale durch die ein Warentransportfahrzeug von einem ersten Niveau in ein höher oder tiefer liegendes zweites Niveau gelangen kann.

Des Weiteren ist vorgesehen, dass das Warentransportfahrzeug einen eigenen Antrieb aufweist. Als eigener Antrieb ist zum Beispiel ein Elektromotor vorgesehen.

In einer vorteilhaften Ausgestaltung ist vorgesehen, dass das Warentransportfahrzeug schienengebunden und/oder schienenungebunden ist. Es ist dabei zum Beispiel vorgesehen, dass das Transportstreckenelement mit einer oder zwei parallel verlaufenden Schienen ausgestattet ist.

Ein schienenungebundenes System ist zum Beispiel durch das Verlegen einer Leitspur realisierbar, die so die Transportstrecke bzw. das Transportstreckenelement bildet. Auf der Leitspur befinden sich dann auch entsprechende Weg-Identifikationsmittel, die es dem Warentransportfahrzeug erlauben, sich zu orientieren. In diesem Fall trägt das Warentransportfahrzeug auch einen, die Leitspur erkennenden Vorrichtung, welche mit einem Scanner oder Kamera ausgestattet ist und in geeigneter Weise auf die Steuerung des Warentransportfahrzeuges einwirkt bzw. mit diesen verbunden ist, um das Warentransportfahrzeug der Leitspur folgend zu steuern.

In einer bevorzugten Ausgestaltung ist dabei auch vorgesehen, dass in der Schiene die Stromleitung angeordnet ist, die über einen am Warentransportfahrzeug vorgesehenen Stromabnehmer das Warentransportfahrzeug mit Energie, das heißt elektrischen Strom versorgt.

Geschickter Weise ist dann das Warentransportfahrzeug mit mindestens einem Stromabnehmer ausgestattet, der mit der an der Schiene vorgesehenen Stromleitung zusammenzuwirken vermag.

Geschickter Weise ist vorgesehen, dass das Warentransportfahrzeug mit einer Batterie oder einem sonstigen Energiespeicher ausgestattet ist, der für den Antrieb des Warentransportfahrzeuges dient. Im Parkbereich bzw. an der Station oder im Überhol- und/oder Rangierbereich ist geschickter Weise eine Auflade-Station für die Batterie vorgesehen.

In einer weiteren bevorzugten Ausführungsform ist vorgesehen, dass das Warentransportfahrzeug mit Rädern, insbesondere mit Antriebsrädern, ausgestattet ist, wobei zumindest ein Teil dieser Räder mit Abrollflächen mit erhöhten Reibkoeffizienten ausgestattet ist. Eine solche Ausstattung erreicht, dass die Warentransportfahrzeuge sicher und zuverlässig Steigerungen der Transportstrecke überwinden können wobei insbesondere, wie bereits beschrieben, in den geneigten Bereichen der Transportstrecke diese Transportstreckenelemente ebenfalls eine reibungserhöhenden Beschichtung aufweisen um einen sicheren und zuverlässigen Betrieb des Warentransportfahrzeuges zu gewährleisten.

Des Weiteren ist günstiger Weise vorgesehen, dass das Warentransportfahrzeug mindestens ein Antriebselement aufweist, das formschlüssig mit den Verbindungselementen von Bereichen der Transportstrecke zusammenzuwirken vermag. Zum Beispiel ist hier zu an dem Warentransportfahrzeug einen Zahnrad vorgesehen, dass im bekannter Weise mit der Zahnstange, die an den Transportelement vorgesehen ist, zusammenwirkt und so eine formschlüssig Verbund bewirkt. Mit einer solchen Ausstattung wird der Betrieb gerade bei stark geneigten oder vertikalen Transportstrecken-Passagen erheblich sicherer gestaltet.

Vorteilhafter Weise ist vorgesehen, dass das Warentransportfahrzeug mindestens ein Halteelement aufweist, das mit an stark geneigten oder vertikal angeordneten Transportstreckenelementen, vorgesehenen Haltemitteln zusammenwirkt. Der erfindungsgemäße Vorschlag umfasst in dieser Variante auch die Möglichkeit, dass das Warentransportfahrzeug sich im Regallager vertikal bewegt. Hierzu ist das Warentransportfahrzeug entsprechend ausgestattet und wirkt dann mit entsprechenden Haltemitteln, zum Beispiel einer Führungsschiene, einem Führungs- oder Halteprofil zusammen. Gleichzeitig können das Halteelement und das Haltemittel auch so ausgebildet sein, dass eine Bewegung des Warentransportfahrzeuges möglich ist. So ist zum Beispiel als Haltemitteln ein oder zwei gemeinsam angetriebene Zahnräder vorgesehen, die mit Abstützrollen ausgestattet sind die sich auf einem Halteprofil abstützen, das gleichzeitige auch eine Zahnstangen-Funktion besitzt, um ein formschlüssigen Zusammenwirken mit dem Zahnrad zu ermöglichen.

Des Weiteren ist erfindungsgemäß vorgesehen, dass das Warentransportfahrzeug ein Warentransportfahrzeug-Steuerungsmodul aufweist, welches mindestens eine der nachfolgenden Modulelemente umfasst:
- Modulelement (a), welches eine drahtlose Datenverbindung zur Lagersteuerung und/oder dem Warentransportfahrzeug-Steuerungsmodul, zumindest eines anderen Warentransportfahrzeuges, unterhält,
- Erfindungsgemäßes Modulelement (b), welches eine Warenerkennungsvorrichtung umfasst, das zum Erfassen eines an der Ware angeordneten Warenidentifikationsmittels, und zum Speichern dieses Warenidentifikationsmittels dient,
- Modulelement, das eine Wegstreckenerkennungsvorrichtung umfasst, das zum Erfassen von auf der Transportstrecke angeordneten Wegidentifikationsmittel dient.
- Modulelement, das eine Steuerung des Antriebes und/oder Lenkung des Warentransportfahrzeuges ermöglicht.
- Modulelement (c), das für die Wegfindung bzw. Wegoptimierung des Warentransportfahrzeuges auf dem Weg zwischen zwei Punkten im Lagersystem dient.
- Modulelement (d), das der Überwachung der Funktionalität bzw. Einsetzbarkeit des Warentransportfahrzeugs, wie zum Beispiel dem Ladezustand der Batterie oder dem Energieverbrauch pro Strecke dient.
- Modulelement (e), das der Erhöhung der Ware pro Fahrt-Kennzahl dient, und/oder der Optimierung der Fahrtstrecke bei der Erledigung eines Lieferauftrages, insbesondere wenn bei einer Fahrt Waren für mehrere Aufträge transportiert werden, wobei dieses Modulelement insbesondere mit dem vorbeschriebenen Modulelement für die Wegfindung zusammenwirkt.
- Modulelement, das der richtigen bzw. optimierten Reihenfolge mehrerer Warentransportfahrzeuge dient, die mindestens eine Ware für eine gemeinsame Sendung zu einer Station transportieren.
- Erfindungsgemäßes Modulelement, welches einen Warenspeicher umfasst, in welchen zumindest eine Wareninformation ablegbar ist und das Modulelement der Optimierung des Lagebetriebes dient.
- Mithilfe des vorgenannten Modulelementes werden die wesentlichen Daten der Ware erkannt und das Modul kann dieses Wissen für eine Optimierung des Lagebetriebes einsetzen. Eine Wareninformation ist zum Beispiel das Verfallsdatum. Waren mit kurzen Verfallsdatum werden im Regallager im vorderen Bereich eingelagert, damit diese schnell verfügbar sind. Des weiteren ist zum Beispiel auch vorgesehen, dass Waren gleichen Verfallsdatums nicht am gleichen Lagerplatz vorgehalten werden wodurch sich die Verfügbarkeit verbessert.
- Ein Optimierungsmodul als Modulelement, welches die Reihenfolge der Waren, die in eine Station nacheinander auf Warentransportfahrzeuge einfahren, unter Ausnutzung von Umladevorgängen der Ware an anderen Stationen und/oder dem Anhalten eines Warentransportfahrzeuges in einem Überhol- und/oder Rangierbereich optimiert, wobei das Optimierungsmodul zumindest teilweise zentral in der Lagersteuerung und/oder zumindest teilweise dezentral in den jeweiligen Warentransportfahrzeug-Steuerungsmodul der Warentransportfahrzeuge vorgesehen ist. Auf die Vorzüge des Optimierungsmodules wurde bereits weiter oben eingegangen.

Durch das Modulelement a ist eine Kommunikation mit der Lagersteuerung und/oder anderen Warentransportfahrzeugen möglich.

Durch das Modulelement b wird erreicht, dass das Warentransportfahrzeug-Steuerungsmodul selbstständig die transportierte Ware erkennt und dann zum Beispiel in den Lagerlisten (über die Lagersteuerung) Informationen hierzu einholen kann.

Die Wegstreckenerkennungsvorrichtung besitzt einen Empfänger oder eine Ausstattung, die mit dem eingesetzten Wegidentifikationsmittel zusammenwirkt d.h. dieses erkennen und auslesen kann.

Als Punkte im Lagersystem werden zum Beispiel alle durch einen Wegidentifikationsmittel beschreibbarer geometrische Ort bezeichnet, dies können zum Beispiel Kreuzungspunkt von Transportstrecken, Weichen in der Transportstrecke, die Stationen, Lagerplätze usw. seien. Dabei benutzt das Modulelement c auch den Umstand, dass im Lagersystem unter Umständen mehrere Wege zwischen zwei Punkten möglich sind. Das Modul kennt dabei den Verkehr auf den einzelnen Transportstrecken und kann dann selbstständig entscheiden, über welchen Weg das Ziel erreicht werden soll.

Für den Fall, dass das Modulelement d eine eingeschränkte Funktionalitäten bzw. Einsetzbarkeit des Warentransportfahrzeuges erkennt (zum Beispiel die Spannung der Batterie ist zu niedrig und es wäre ein Aufladen ratsam) dann lehnt dieses Warentransportfahrzeug weitere Transportaufgaben ab und fährt in einen Parkbereich um gewartet zu werden.

Bei der einfachsten Transportaufgabe erhält das Warentransportfahrzeug den Auftrag eine spezielle Ware aus dem Regallager zu einer Station zu transportieren. In diesem Fall ist die Ware pro Fahrt-Kennzahl 1. Eine solche Fahrt ist nicht sehr effizient! Eine Verbesserung d. h. eine Erhöhung dieser Kennzahl wird dadurch erreicht, dass mithilfe des Modulelemente e zu einem bestehenden Lieferauftrag weitere Lieferaufträge gesucht werden, die entweder die gleiche Ware benötigen, und wenn solche Lieferaufträge bestehen, dann werden gleich eine größere Anzahl der gleichen Ware in den Kommissionierungsbereich bzw. Kommissionierungsstation transportiert. Alternativ ist es möglich, dass Waren für den gleichen oder für andere Aufträge mitgenommen werden, die "auf dem Weg" liegen.

Bei einer bevorzugten Ausgestaltung des Vorschlags ist vorgesehen, dass jedem Warentransportfahrzeug ein individuelles Warentransportfahrzeug-Identifikationsmittel zugeordnet ist. Dadurch ist jedes Warentransportfahrzeug eindeutig ansprechbar und erkennbar.

Des Weiteren ist vorgesehen, dass das Warentransportfahrzeug mit einem Fördermittel, wie zum Beispiel einem durch einen Antrieb antreibbare/s Transportband oder Rollenbahn, für das Ein- oder Ausfördern der auf dem Warentransportfahrzeug vorgesehenen Ware ausgestattet ist. Diese Ausstattung erlaubt ein automatisches Be- und Entladen des Warentransportfahrzeuges mit der Ware und zwar sowohl am Lagerplatz wie auch in der Station.

In einer vorteilhaften Ausgestaltung ist vorgesehen, dass das Fördermittel derart ausgebildet ist, dass eine Abgabe der auf dem Warentransportfahrzeug transportierten Ware an der Station im Vorbeifahren ohne Stopp des Warentransportfahrzeuges erfolgt. Diese vorteilhafte Variante spart Zeit, da das Warentransportfahrzeug für die Übergabe der Ware nicht erst abzubremsen und dann wieder zu beschleunigen ist. Geschickter Weise kennt dabei das Warentransportfahrzeug-Steuerungsmodul die Masse der transportierten Ware und kann dann hieraus die optimale Abwurfkraft bestimmen, damit die Abwurfbewegung auch unterschiedlicher Waren immer möglichst gleichartig ist. Zum Beispiel befindet sich im Bereich der Station eine Waage, die beim einlagern der Ware diese wiegt oder aber das Gewicht bzw. die Masse ist als Wareninformation hinterlegt oder aber das Warentransportfahrzeug ist mit einer mitfahrenden Waage ausgestattet.

Erfindungsgemäß ist vorgesehen, dass das Warentransportfahrzeug mit einem Energieabtriebsmittel oder Übertrieb, zum Beispiel einer Abtriebswelle oder einen Abtriebsrad bzw. Abtriebszahnrad ausgestattet ist, das in Wirkverbindung mit einem Energieanschlusspunkt am Fördermittel des Lagerplatzes oder der Station in Wirkverbindung bringbar ist, und welcher insbesondere mit dem Antrieb des Fördermittels des Warentransportfahrzeugs angetrieben ist. Durch diese Ausstattung wird erreicht, dass keine aktiven (und auch kostenträchtige) Antriebe an den Lagerplätzen vorgesehen werden müssen, die nur schwer zu warten sind. Dabei werden solche Antriebe nur selten benötigt, nämlich nur zum Ein- oder Auslagern einer Ware. Insofern ist es von großem Vorteil, ein Energieabtriebsmittel oder einen übertrieb, wie beschrieben, vorzusehen, durch den dann bei Bedarf Bewegungsenergie in den Lagerplatz eingeprägt wird um die Ware ein- oder auszulagern.

Vorteilhafter Weise ist vorgesehen, dass an mindestens einem Lagerplatz des Regallagers oder einer Station ein Fördermittel, wie zum Beispiel einen Transportband oder eine Rollenbahn vorgesehen ist, oder alternativ an mindestens einem Lagerplatz des Regallagers oder der Station Gleitelemente angeordnet sind, auf welche die Ware aufgeschoben oder abgezogen wird.

Des Weiteren ist in dem Vorschlag vorteilhafter Weise vorgesehen, dass für das Fördermittel am Lagerplatz oder der Station jeweils ein eigener Antrieb, zum Beispiel ein Elektromotor vorgesehen ist und/oder das Fördermittel einen Energieanschlusspunkt, wie zum Beispiel eine Steckeraufnahme, einen Antriebszapfen oder ein Antriebsrad aufweist, der insbesondere mit einem am Warentransportfahrzeug vorgesehenen Energieabtriebsmitteln in Wirkverbindung bringbar ist. Es ist klar, dass der Austausch eines Steckers mit einer Steckeraufnahme und eine Steckeraufnahme mit einem Stecker im Sinne dieser Erfindung als äquivalente Mittel zu verstehen sind.

Erfindungsgemäß ist vorgesehen, dass das Regal eine Regaltiefe aufweist, die groß genug ist, mindestens eine Lagerplatzreihe von zwei Lagerplätzen hintereinander zu bilden. Da gemäß der Erfindung vorgesehen ist, dass auch der Lagerplatz ein Fördermittel aufweist kann. Geschickterweise kann das Regal eine Regaltiefe aufweisen, die eine Mehrzahl von Waren hintereinander beinhaltet und somit eine Mehrzahl (mindestens zwei) von Lagerplätzen, eine Lagerplatzreihe zur Verfügung stellt. Durch das vorgesehene Fördermittel können auch weiter hinten liegende Waren bei Bedarf auf das Warentransportfahrzeug gefördert werden.

Erfindungsgemäß ist vorgesehen, dass die Lagerplatzreihe von zwei Seiten aus bedienbar ist. Diese redundante Ausgestaltung erlaubt es, in effektiver Weise auf die verschiedenen Lagerplätze zugreifen zu können.

Erfindungsgemäß ist vorgesehen, dass für alle Lagerplätze der Lagerplatzreihe ein gemeinsames Fördermittel vorgesehen ist.

In einer weiteren bevorzugten Ausführungsform ist vorgesehen, dass das Warentransportfahrzeug mit zumindest einem Steuer- und Speichermodul, insbesondere mit einem Industrie-PC ausgestattet ist, welche insbesondere das Warentransportfahrzeug-Steuerungsmodul umfasst.

Des Weiteren ist günstiger Weise vorgesehen, dass zumindest ein Warentransportfahrzeug mit einer Abschleppkupplung und einem Abschlepp-Steuerungsmodul ausgestattet ist. Falls ein Warentransportfahrzeug liegen bleibt, wird dieses durch ein anderes Warentransportfahrzeug, welches mit einer Abschleppkupplung ausgestattet ist, abgeschleppt. Der Abschleppvorgang selber läuft automatisch durch, und wird von dem Abschlepp-Steuerungsmodul überwacht. Dabei überwacht das Abschlepp-Steuerungsmodul zum einen den Zusammen-Kuppelvorgang und begrenzt des Weiteren die Höchstgeschwindigkeit eines solchen Verbandes. Dabei sendet ein liegengebliebenes Warentransportfahrzeug eine entsprechende Statusmeldung an die Lagersteuerung, die ihrerseits ein Warentransportfahrzeug, welches diese Abschlepp-Funktion besitzt, zu dem liegen gebliebenen Warentransportfahrzeug dirigiert.

Bei einer bevorzugten Ausgestaltung des Vorschlags ist vorgesehen, dass die Lagersteuerung die Anzahl der im Lagersystem eingesetzten Warentransportfahrzeuge, insbesondere aufgrund zumindest einer der nachfolgenden Informationen steuert:
- Anzahl der Warenein- und/oder Warenauslieferungsvorgänge, insbesondere pro Zeiteinheit,
- Anzahl der Warentransportfahrzeuge in einen speziellen Regallagerbereich.

Durch diesen Vorschlag wird erreicht, dass immer eine ausreichende aber keine zu große Anzahl von Warentransportfahrzeugen verfügbar sind. Dadurch gelingt es eine effiziente, insbesondere ressourcenschonende Auslastung zu erreichen bei gleichzeitig hoher Verfügbarkeit und schnelle Reaktionszeit des Lagersystems beim zusammenstellen von Sendungsaufträgen.

Das Lagersystem ist auch in der Lage die Anzahl der Warentransportfahrzeuge in einen speziellen Regallagerbereich zu überwachen, da es ermitteln kann, welche einzelnen Warentransportfahrzeuge sich gerade zwischen zwei Weg-Identifikationsmittel (einem Streckenbereich bzw. Regallagerbereich) befinden und kann dann wenn die Dichte an Warentransportfahrzeugen zu hoch ist, entsprechend reagieren, weil bei einer zu großen Fahrzeuganzahl pro Regallagerbereich es leicht zu Behinderung kommen kann.

Des Weiteren ist vorgesehen, dass der Lagerplatz oder die Station mit einem Lagerplatzmodul bzw. einem Stationsmodul ausgestattet ist, dass mindestens eines der nachfolgenden Modulelemente umfasst:
- Modulelement, welches eine drahtlose Datenverbindung zur Lagersteuerung unterhält.
- Modulelement, welches eine Warenerkennungsvorrichtung umfasst, das zum Erfassen eines an der Ware angeordneten Waren-Identifikationsmittel und zum Speichern dieses Warenidentifikationsmittel dient.
- Modulelement, das eine Warentransportfahrzeug-Erkennungsvorrichtung umfasst, das zum Erfassen eines an dem Warentransportfahrzeug angeordneten Warentransportfahrzeug-Identifikationsmittel dient.

In einer vorteilhaften Ausgestaltung ist vorgesehen, dass an jedem Lagerplatz oder jeder Station ein individuelle/r Lagerplatz- oder Station-Identifikationsmittel vorgesehen ist, welche insbesondere mit dem Lagerplatz- bzw. Stationsmodul verbunden ist bzw. zusammenzuwirken vermag. Eine solches individuelles Lagerplatz- oder Station-Identifikationsmittel hat letztendlich die gerne gleichen Eigenschaften und auch Aufgaben wie ein Weg-Identifikationsmittel. Es ist Teil des Wegeplans und dient der Orientierung der Warentransportfahrzeuge, die diese Identifikationsmittel automatisch erkennen und mit ihrer elektronischen Karte vergleichen. Geschickter Weise ist vorgesehen, dass das Warentransportfahrzeuge über die Transportstrecke jeden Lagerplatz im Regallager erreicht.

Erfindungsgemäß ist vorgesehen, dass das Regallager ein Gestell für die Aufnahme bzw. Lagerung der Transportstreckenelemente umfasst.

Des Weiteren ist günstiger Weise vorgesehen, dass das Transportstreckenelement-Identifikationsmittel und/oder das Warentransportfahrzeug-Identifikationsmittel und/oder das Wegidentifikationsmittel und/oder das Warentransportfahrzeug-Identifikationsmittel als aktives Identifikationsmittel, wie zum Beispiel ein RFID-Element oder als passives Identifikationsmittel, wie zum Beispiel einem QR- oder Barcode ausgebildet ist. Natürlich sind die verschiedenen Erkennungsvorrichtungen so ausgestattet, dass sie die eingesetzten Identifikationsmittel zu erkennen vermögen, wobei dann die Situation von der jeweiligen Steuerungsmodul auch gespeichert und weiterverarbeitet wird.

In diesem Zusammenhang wird insbesondere darauf hingewiesen, dass alle im Bezug auf das Lagersystem beschriebenen Merkmale und Eigenschaften aber auch Verfahrensweisen sinngemäß auch bezüglich der Formulierung eines Verfahrens übertragbar und einsetzbar und als mitoffenbart gelten. Gleiches gilt auch in umgekehrter Richtung, das bedeutet, nur im Bezug auf das Verfahren genannte, bauliche also vorrichtungsgemäße Merkmale können auch im Rahmen der Ansprüche für das Lagersystem berücksichtigt und beansprucht werden und zählen ebenfalls zur Offenbarung.

Im Rahmen dieser Anmeldung wurden die verschiedenen Steuerungen mit einer Vielzahl von Funktionalitäten von verschiedenen Modulen bzw. Modulelementen beschrieben, wobei diese beschriebenen Funktionalitäten ausdrücklich auch auf alle anderen in dieser Anmeldung (gegebenenfalls auch an anderer Stelle beschriebenen) erwähnten Schaltungen bzw. Steuerungen zu übertragen sind und als mitoffenbart gelten.

## Patentansprüche

1. Lagersystem, umfassend zumindest eine Station, wie eine Wareneinlagerungs-, Warenumlagerungs-, Warenkommissionierungs- oder Warenauslagerungsstation und ein Regallager, mit einer Vielzahl von nebeneinander und/oder übereinander angeordneten Lagerplätzen für die Lagerung von Waren, wobei das Lagersystem mindestens ein Warentransportfahrzeug umfasst, das mindestens eine Ware von der Station zu dem Lagerplatz oder umgekehrt transportiert und der Transport ohne ein Umladen der Ware auf ein anderes Warentransportfahrzeug oder ein anderes Transportmittel erfolgt, wobei Station und Regallager nebeneinander angeordnet sind und sich das Warentransportfahrzeug für den Transport der Ware sowohl im, insbesondere im wesentlich horizontal orientierten Bereich zwischen der Station und dem Regallager, wie auch im Regallager, hier auch schräg oder vertikal bewegt und das Warentransportfahrzeug mit einem Fördermittel, wie zum Beispiel einem durch einen Antrieb antreibbare/s Transportband oder Rollenbahn, für das Ein- oder Ausfördern der auf - 2 - dem Warentransportfahrzeug vorgesehenen oder vorsehbaren Ware ausgestattet ist und die Ware während des Transports auf dem Fördermittel verbleibt und an mindestens einem Lagerplatz des Regallagers oder einer Station ein Fördermittel, wie zum Beispiel ein Transportband oder eine Rollenbahn vorgesehen ist, **dadurch gekennzeichnet, dass** das Warentransportfahrzeug mit einem Energieabtriebsmittel oder Übertrieb, zum Beispiel einem Stecker, einer Abtriebswelle oder einem Abtriebsrad bzw. Abtriebszahnrad ausgestattet ist, das in Wirkverbindung mit einem Energieanschlusspunkt am Fördermittel des Lagerplatzes oder der Station in Wirkverbindung bringbar ist, und welcher mit dem Antrieb oder der Energiequelle des Fördermittels des Warentransportfahrzeugs angetrieben ist, wobei das Regallager, neben mindestens einer im Wesentlichen horizontal orientierten Transportstrecke auch mindestens eine geneigte oder vertikal verlaufende Transportstrecke aufweist, und das Warentransportfahrzeug die Transportstrecke befährt, und wobei das Regallager ein Gestell für die Aufnahme bzw. Lagerung der Transportstreckenelemente umfasst, wobei das Regal eine Regaltiefe aufweist, die groß genug ist, um mindestens eine Lagerplatzreihe von mindestens zwei Lagerplätzen hintereinander zu bilden, die eine Mehrzahl von Waren hintereinander beinhaltet und die Lagerplatzreihe von zwei Seiten aus bedienbar ist, wobei für alle Lagerplätze der Lagerplatzreihe ein gemeinsames Fördermittel vorgesehen ist und das Warentransportfahrzeug ein Warentransportfahrzeug-Steuerungsmodul aufweist, welches zumindest ein Modulelement aufweist welches eine Warenerkennungsvorrichtung umfasst, das zum Erfassen eines an der Ware angeordneten Warenidentifikationsmittels, und zum Speichern dieses Warenidentifikationsmittels dient und das Warentransportfahrzeug-Steuerungsmodul ein weiteres Modulelement umfasst, welches einen Warenspeicher umfasst, in welchen zumindest eine Wareninformation ablegbar ist und das Modulelement der Optimierung des Lagebetriebes dient.

2. Lagersystem nach einem der vorhergehenden Ansprüche, **dadurch gekennzeichnet, dass** das Lagersystem über eine Lagersteuerung verfügt, welche mit einem Lagerplatzmodul, welches am Lagerplatz angeordnet ist und/oder einen Warentransportfahrzeug-Steuerungsmodul, welches am Warentransportfahrzeug angeordnet ist und/oder einem Transportstreckenelement-Modul, welches am Transportstreckenelement angeordnet ist, bevorzugt drahtlos, zum Beispiel über Funk, WLAN oder Bluetooth Informationen austauscht.

3. Lagersystem nach einem der vorhergehenden Ansprüche, **dadurch gekennzeichnet, dass** die, insbesondere geneigtem oder vertikale Transportstrecke bzw. Transportstreckenelement, mit einer reibungserhöhenden Oberfläche ausgestattet ist und/oder Bereiche mit Verbindungselementen aufweist, die formschlüssig mit mindestens einem Antriebselement des Warentransportfahrzeuges zusammenwirkt.

4. Lagersystem nach einem der vorhergehenden Ansprüche, **dadurch gekennzeichnet, dass** die Transportstrecke mindestens einen Überhol- und/oder Rangierbereich aufweist, um die Reihenfolge der in eine Station einfahrende Reihe von Warentransportfahrzeugen zu verändern oder zu optimieren.

5. Lagersystem nach einem der vorhergehenden Ansprüche, **dadurch gekennzeichnet, dass** die Lagersteuerung mindestens eines der nachfolgenden Modulelemente aufweist:
- Modulelement, das der richtigen, bzw. optimierten Reihenfolge mehrerer Warentransportfahrzeuge dient, die mindestens eine Ware für eine gemeinsame Sendung zu einer Station transportieren
- Modulelement, für die Realisierung von Eilaufträgen
- Ein Optimierungsmodul als Modulelement, welches die Reihenfolge der Waren, die in eine Station nacheinander auf Warentransportfahrzeuge einfahren, unter Ausnutzung von Umlade-vorgängen der Ware an anderen Stationen und/oder dem Anhalten eines Warentransportfahrzeuges in einem Überhol- und/oder Rangierbereich optimiert, wobei das Optimierungsmodul zumindest teilweise zentral in der Lagersteuerung und/oder zumindest teilweise dezentral in den jeweiligen Warentransportfahrzeug-Steuerungsmodul der Warentransportfahrzeuge vorgesehen ist.

6. Lagersystem nach einem der vorhergehenden Ansprüche, **dadurch gekennzeichnet, dass** das Warentransportfahrzeug schienengebunden und/oder schienenungebunden ist.

7. Lagersystem nach einem der vorhergehenden Ansprüche, **dadurch gekennzeichnet, dass** das Warentransportfahrzeug mit einer Batterie oder einem sonstigen Energiespeicher ausgestattet ist, der für den Antrieb des Warentransportfahrzeuges dient und/oder das Warentransportfahrzeug mit Rädern, insbesondere mit Antriebsrädern, ausgestattet ist, wobei zumindest ein Teil dieser Räder mit Abrollflächen mit erhöhten Reibkoeffizienten oder mit Formschlusselementen ausgestattet ist.

8. Lagersystem nach einem der vorhergehenden Ansprüche, **dadurch gekennzeichnet, dass** das Warentransportfahrzeug mindestens ein Antriebselement aufweist, das formschlüssig mit den Verbindungselementen von Bereichen der Transportstrecke zusammenzuwirken vermag und/oder das Warentransportfahrzeug mindestens ein Halteelement aufweist, das mit an stark geneigten oder vertikal angeordneten Transportstreckenelementen, vorgesehenen Haltemitteln zusammenwirkt.

9. Lagersystem nach einem der vorhergehenden Ansprüche, **dadurch gekennzeichnet, dass** das Warentransportfahrzeug mit mindestens einem Stromabnehmer ausgestattet ist, der mit der an einer Schiene vorgesehenen Stromleitung zusammenzuwirken vermag und/oder zumindest ein Warentransportfahrzeug mit einer Abschleppkupplung und einem Abschlepp-Steuerungsmodul ausgestattet ist.

10. Lagersystem nach einem der vorhergehenden Ansprüche, **dadurch gekennzeichnet, dass** das Warentransportfahrzeug-Steuerungsmodul zusätzlich mindestens eine der nachfolgenden Modulelemente umfasst:
- Modulelement, welches eine drahtlose Datenverbindung zur Lagersteuerung und/oder dem Warentransportfahrzeug-Steuerungsmodul, zumindest eines anderen Warentransportfahrzeuges, unterhält,
- Modulelement, das eine Wegstreckenerkennungsvorrichtung umfasst, das zum Erfassen von auf der Transportstrecke angeordneten Wegidentifikationsmittel dient.
- Modulelement, das eine Steuerung des Antriebes und/oder Lenkung des Warentransportfahrzeuges ermöglicht.
- Modulelement, das für die Wegfindung bzw. Wegoptimierung des Warentransportfahrzeuges auf dem Weg zwischen zwei Punkten im Lagersystem dient.
- Modulelement, das der Überwachung der Funktionalität bzw. Einsetzbarkeit des Warentransportfahrzeugs, wie zum Beispiel dem Ladezustand der Batterie oder dem Energieverbrauch pro Strecke dient.
- Modulelement, das der Erhöhung der Ware pro Fahrt-Kennzahl dient, und/oder der Optimierung der Fahrtstrecke bei der Erledigung eines Lieferauftrages, insbesondere wenn bei einer Fahrt Waren für mehrere Aufträge transportiert werden, wobei dieses Modulelement insbesondere mit dem vorbeschriebenen Modulelement für die Wegfindung zusammenwirkt.
- Modulelement, das der richtigen bzw. optimierten Reihenfolge mehrerer Warentransportfahrzeuge dient, die mindestens eine Ware für eine gemeinsame Sendung zu einer Station transportieren.
- Ein Optimierungsmodul als Modulelement, welches die Reihenfolge der Waren, die in eine Station nacheinander auf Warentransportfahrzeuge einfahren, unter Ausnutzung von Umlade-vorgängen der Ware an anderen Stationen und/oder dem Anhalten eines Warentransportfahrzeuges in einem Überhol- und/oder Rangierbereich optimiert, wobei das Optimierungsmodul zumindest teilweise zentral in der Lagersteuerung und/oder zumindest teilweise dezentral in den jeweiligen Warentransportfahrzeug-Steuerungsmodul der Warentransportfahrzeuge vorgesehen ist.

11. Lagersystem nach einem der vorhergehenden Ansprüche, **dadurch gekennzeichnet, dass** das Fördermittel derart ausgebildet ist, dass eine Abgabe der auf dem Warentransportfahrzeug transportierten Ware an der Station im Vorbeifahren, ohne Stopp des Warentransportfahrzeuges erfolgt.

12. Lagersystem nach einem der vorhergehenden Ansprüche, **dadurch gekennzeichnet, dass** für das Fördermittel am Lagerplatz oder der Station jeweils ein eigener Antrieb, zum Beispiel ein Elektromotor vorgesehen ist und/oder das Fördermittel einen Energieanschlusspunkt, wie zum Beispiel eine Steckeraufnahme, einen Antriebszapfen oder ein Antriebsrad aufweist, der insbesondere mit einem am Warentransportfahrzeug vorgesehenen Energieabtriebsmitteln in Wirkverbindung bringbar ist.

## Claims

1. Storage system comprising at least one station, such as a station for storage, rearrangement, commissioning, or relocation of goods, and a storage shelf with a plurality of storage places for storing goods, the storage places being arranged adjacent to one another and/or one above the other, wherein the storage system comprises at least one goods transport vehicle transporting at least one good from the station to the storage place or vice versa, and the transport is carried out without the good being transferred to another goods transport vehicle or another means of transport, wherein station and storage shelf are arranged one beside the other, and for the transport of the good the goods transport vehicle moves in the region between the station and the storage shelf that is orientated essentially horizontally, as well as diagonally and vertically in the storage shelf, and the goods transport vehicle is equipped with a conveying means, such as for example a conveyor line or roller conveyor driven by a drive for the supply or output of the goods that are or can be provided on the goods transport vehicle, and during the transport the good remains on the conveying means, and at least at one storage place of the storage shelf or one station a conveying means, such as for example a conveyor line or roller conveyor is provided, **characterized in that** the goods transport vehicle is equipped with an energy output means or overdrive, for example a plug, a pinion shaft, or an output gear or pinion socket gear, that can be brought into operative connection with an energy connection point at the conveying means of the storage place or the station, and which is driven by the drive or the power source of the conveying means of the goods transportation vehicle, wherein the storage shelf, besides at least one transport segment orientated essentially horizontally, also is provided with an inclined or vertically extending transport segment, and the goods transport vehicle runs on the transport segment, and wherein the storage shelf comprises a frame for holding or storing the transport segment elements, wherein the shelf has a shelf depth large enough for forming at least one row of storage places with at least two storage places one behind the other that contains a multitude of goods one behind the other, and the row of storage places can be operated from two sides, wherein for all storage places of the row of storage places a common conveying means is provided, and the goods transport vehicle has a goods transport vehicle control module with at least one module element comprising a goods identification device that serves for collecting a goods identification means attached to the good and for storing this goods identification means, and the goods transport vehicle control module comprises another module element with a goods memory where at least one piece of goods information can be filed, and the module element serves for optimizing the storage operation.

2. The storage system according to any one of the preceding claims, **characterized in that** the storage system has a storage control that exchanges information preferably wireless, e.g. via radio, WLAN or Bluetooth with a storage place module that is arranged at the storage place, and/or a goods transport vehicle control module that is arranged at the goods transport vehicle, and/or a transport segment element module that is arranged at the transport segment element.

3. The storage system according to any one of the preceding claims, **characterized in that** the in particular inclined or vertical transport segment or transport segment element is equipped with a friction-increasing surface, and/or has regions with connecting elements that cooperate in a positive fit with at least one drive element of the goods transport vehicle.

4. The storage system according to any one of the preceding claims, **characterized in that** the transport segment has at least one region for overtaking and/or maneuvering in order to modify or optimize the sequence of the series of goods transport vehicles entering a station.

5. The storage system according to any one of the preceding claims, **characterized in that** the storage control has at least one of the following module elements:
- module element serving for the correct or optimized sequence of several goods transport vehicles that transport at least one good for a common delivery to a station,
- module element for realizing rush orders,
- an optimizing module as module element that optimizes the sequence of the goods entering a station one after the other on goods transport vehicles, while using reloading processes of the good at other stations and/or the stop of a goods transport vehicle in an overtaking and/or maneuvering region, wherein the optimizing module is provided at least partly centrally in the storage control and/or at least partly decentrally in the respective goods transport vehicle control module of the goods transport vehicle.

6. The storage system according to any one of the preceding claims, **characterized in that** the goods transport vehicle is rail-borne and/or not rail-borne.

7. The storage system according to any one of the preceding claims, **characterized in that** the goods transport vehicle is equipped with a battery or another energy storage device that serves for the drive of the goods transport vehicle, and/or the goods transport vehicle is equipped with wheels, in particular drive wheels, wherein at least a part of these wheels is equipped with rolling surfaces having increased friction coefficients or with positive fit elements.

8. The storage system according to any one of the preceding claims, **characterized in that** the goods transport vehicle has at least one drive element that is able to interact in a form-fitting way with the connecting elements of regions of the transport segment, and/or the goods transport vehicle has at least one holding element interacting with holding elements provided at strongly inclined or vertical transport segment elements.

9. The storage system according to any one of the preceding claims, **characterized in that** the goods transport vehicle is equipped with at least one current collector that is able to interact with the power line provided at the rail, and/or at least one goods transport vehicle is equipped with a tow coupling and a tow control module.

10. The storage system according to any one of the preceding claims, **characterized in that** the goods transport vehicle control module comprises additionally at least one of the following module elements:
- module element that supports a wireless data connection to the storage control and/or the goods transport vehicle control module of at least one other goods transport vehicle,
- module element that comprises a path segment detection device serving for recording the path identification means arranged on the transport segment,
- module element that allows a control of the drive and/or steering of the goods transport vehicle,
- module element serving for the path finding or path optimizing of the goods transport vehicle on the path between two points in the storage system,
- module element serving for the monitoring of the functionality or usability of the goods transport vehicle, such as for example the charging status of the battery or energy consumption per segment,
- module element serving for increasing the goods-per-travel index and/or the optimizing of the travel segment when carrying out a delivery order, in particular when, during a travel, goods for several orders are transported, wherein this module element interacts in particular with the before-described module element for the path finding,
- module element that serves for the correct or optimal sequence of several goods transport vehicles that transport at least one good for a common delivery to a station,
- an optimizing module as module element optimizing the sequence of the goods entering a station one after the other on goods transport vehicles, while using relocation processes of the good at other stations, and/or the stopping of a goods transport vehicle in an overtaking and/or maneuvering region, wherein the optimizing module is provided at least partly centrally in the storage control and/or at least partly decentrally in the respective goods transport vehicle control module of the goods transport vehicles.

11. The storage system according to any one of the preceding claims, **characterized in that** the conveying means is configured such that a discharge of the good transported on the goods transport vehicle is carried while passing the station without any stopping of the goods transport vehicle.

12. The storage system according to any one of the preceding claims, **characterized in that** each time at the storage place or the station an individual drive is provided for the conveying means, for example an electro-motor, and/or the conveying means has a power connecting point such as, for example, a socket, a drive pin or drive wheel that can be brought in particular into operative connection with the energy output means provided at the goods transport vehicle.

## Revendications

1. Système de stockage, comprenant au moins une station que ce soit une station de réception, de transfert, de commissionnement ou de sortie de marchandises et un rayonnage comportant plusieurs rayons de stockage côté à côte et/ou superposés destinés à stocker la marchandise et au moins un chariot de transport de marchandise permettant au moins de transporter la marchandise de la station vers le lieu de stockage ou l'inverse et ceci, sans déplacer la marchandise vers un autre chariot ou un autre moyen de transport, construit de façon à ce que la station et le rayonnage soient situés côte à côte et à ce que le chariot de transport de marchandise se déplace avec la marchandise dans la zone entre la station et le rayonnage essentiellement horizontale et aussi à l'intérieur du rayonnage et ici même en biais ou verticalement et à ce que le chariot de transport de marchandise est muni d'un moyen de transport, par exemple un convoyeur à bande ou un convoyeur à rouleaux pouvant être commandé par un moteur et permettant de réceptionner ou de sortir la marchandise située ou prévu d'être située sur le chariot et à ce que la marchandise reste sur ce moyen de transport et à ce qu'un moyen de transport tel qu'un convoyeur à bande ou à rouleaux existe au niveau d'au moins un emplacement de stockage du rayonnage ou d'au moins une station, **caractérisé en ce que** le chariot de transport de marchandise est muni d'un moyen de transfert d'énergie ou d'entrainement, par exemple une fiche, un arbre de commande ou un roue ou une roue dentelée d'entrainement pouvant transférer de l'énergie à un point de réception d'énergie au niveau du moyen de transport du rayonnage ou de la station de façon à ce qu'il soit commandé par le moteur ou la source d'énergie du moyen de transport du chariot de transport de marchandise et **en ce que** le rayonnage comporte en plus d'une voie de transport essentiellement horizontale également au moins une voie de transport inclinéeou verticale sur lesquelles se déplace le chariot de transport de marchandise et **en ce que** le rayonnage comporte une structure permettant de réceptionner ou de stocker les éléments de la voie de transport et **en ce que** le rayonnage possède une profondeur de rayons de stockage suffisante afin de former une série d'au moins deux emplacements de stockage l'un derrière l'autre contenant plusieurs marchandises l'une derrière l'autre et pouvant être accédés par les deux côtés avec un seul moyen de transport commun à tous les emplacements de stockage d'une série d'emplacements de stockage et **en ce que** le chariot de transport comporte un module de pilotage avec au moins un élément de module comportant un dispositif d'identification de marchandise permettant de saisir et de stocker un moyen d'indentification situé au niveau de la marchandise et **en ce que** le module de pilotage du chariot de transport de marchandise comporte un autre élément de module avec une mémoire de marchandise dans laquelle au moins une information sur la marchandise peut être stockée et **en ce que** cet élément de module sert à l'optimisation des mouvements de stockage.

2. Système de stockage selon une des revendications précédentes, **caractérisé en ce que** le système de stockage est muni d'un système de contrôle de stockage permettant d'échanger des informations de préférence sans fils, par exemple via réseau hertzien, WLAN ou Bluetooth avec un module de l'emplacement de stockage situé au niveau de l'emplacement de stockage et/ou avec un module de pilotage du chariot de transport de marchandise situé au niveau du chariot de transport de marchandise et/ou avec un module d'élément de voie de transport situé au niveau d'un élément de voie de transport.

3. Système de stockage selon une des revendications précédentes, **caractérisé en ce que** la voie de transport ou l'élément de voie de transport pouvant être en particulier incliné ou vertical est muni d'une surface à friction augmentée et/ou **en ce qu'**il possède des zones avec des éléments de liaison interagissant via une transmission de forces par des formes complémentaires avec au moins un élément de commande du chariot de transport de marchandise.

4. Système de stockage selon une des revendications précédentes, **caractérisé en ce que** la voie de transport comporte au moins une zone de dépassement et/ou de rangement afin de pouvoir modifier ou optimiser l'ordre séquentiel des chariots de transport de marchandise entrant dans une station.

5. Système de stockage selon une des revendications précédentes, **caractérisé en ce que** le système de contrôle de stockage comporte au moins un des éléments de module :
- un élément de modules destiné à optimiser ou à rectifier l'ordre séquentiel de plusieurs chariots de transport de marchandise transportant au moins une marchandise pour un envoi commun vers une station,
- un élément de module permettant de réaliser des envois urgents,
- un module d'optimisation comme élément de module permettant d'optimiser l'ordre séquentiel des marchandises entrant l'une après l'autre sur des chariots de transport de marchandise en utilisant des procédés de transfert de marchandise vers d'autres stations et/ou en utilisant la possibilité d'arrêter un chariot de transport de marchandise au niveau d'une zone de dépassement et/ou de rangement, de façon à ce que le module d'optimisation est situé au centre au moins partiellement au niveau du module de contrôle de stockage et décentralisé au moins partiellement au niveau des modules de pilotage des chariots de transport de marchandise des chariot de transport de marchandise.

6. Système de stockage selon une des revendications précédentes, **caractérisé en ce que** le chariot de transport de marchandise est relié aux rails et/ou n'est pas relié aux rails.

7. Système de stockage selon une des revendications précédentes, **caractérisé en ce que** le chariot de transport de marchandises comporte une batterie ou un autre élément de stockage d'énergie servant au moteur du chariot de transport de marchandises et/ou **en ce que** le chariot de transport de marchandises possède des roues, en particulier des roues commandées dont au moins certaines possèdent des surfaces de roulement ayant des coefficients de friction augmentés ou ayant des éléments permettant de transmettre des forces par des formes complémentaires.

8. Système de stockage selon une des revendications précédentes, **caractérisé en ce que** le chariot de transport de marchandises possède un élément d'entrainement pouvant interagir par complémentarité des formes avec des éléments de connexion de zones de la voie de transport et/ou **en ce que** le chariot de transport de marchandises comporte au moins un élément d'immobilisation permettant d'interagir avec des moyens d'immobilisation situés au niveaudes éléments de voies de transport fortement inclinés ou verticaux.

9. Système de stockage selon une des revendications précédentes, **caractérisé en ce que** le chariot de transport de marchandises est muni d'au moins d'un balai de courant permettant d'interagir avec un conducteur de courant situé au niveau d'un rail et/ou **en ce qu'**au moins un chariot de transport de marchandises est muni d'un élément de couplage de traction et un module de contrôle de traction.

10. Système de stockage selon une des revendications précédentes, **caractérisé en ce que** le module de contrôle de chariot de transport de marchandises comporte en plus au moins un des éléments de module suivants:
- un élément de module entretenant une liaison sans fil de transfert de données avec le système de contrôle de stockage et/ou avec le module de pilotage des chariots de transport de marchandises d'au moins un autre chariot de transport de marchandises,
- un élément de module comprenant un dispositif de reconnaissance de voie de transport permettant de saisir des moyens d'identification de voie situés sur la voie de transport,
- un élément de module permettant de piloter le moteur et/ou le guidage du chariot de transport de marchandises,
- un élément de module servant à trouver ou optimiser le chemin du chariot de transport de marchandises sur le chemin entre deux points dans le système de stockage,
- un élément de module servant à la surveillance de la fonctionnalité ou de l'état du chariot de transport de marchandises par exemple de l'état de charge de la batterie ou de la consommation énergétique par chemin parcouru,
- un élément de module servant à augmenter le nombre de marchandises par indication de déplacement et/ou à l'optimisation du chemin parcouru pour satisfaire une commande de livraison, en particulier lorsque le déplacement sert à satisfaire plusieurs commandes de façon à ce que cet élément de module travaille en particulier avec l'élément de module servant à trouver le chemin, décrit en haut,
- un élémente de module servant à la séquence correcte ou optimisée de plusieurs chariots de transport de marchandises qui transportent au moins une marchandise pour un envoi commun vers une station,
- un module d'optimisation comme élément de module permettant d'optimiser l'ordre séquentiel des marchandises rentrant l'une après l'autre sur des chariots de transport de marchandises en utilisant des procédés de transfert de marchandises vers d'autres stations et/ou en utilisant la possibilité d'arrêter un chariot de transport de marchandises au niveau d'une zone de dépassement et/ou de rangement, de façon à ce que le module d'optimisation est situé au centreau moins partiellement au niveau du module de contrôle de stockage et décentralisé au moins partiellement au niveau des modules de pilotage des chariots de transport de marchandises des chariot de transport de marchandises.

11. Système de stockage selon une des revendications précédentes, **caractérisé en ce que** le moyen de transport est réalisé de façon à ce qu'un transfert de la marchandise située sur le chariot de transport de marchandises vers une station peut être effectué en passant, c'est-à-dire sans arrêter le chariot de transport de marchandises.

12. Système de stockage selon une des revendications précédentes, **caractérisé en ce qu'**un moteur, par exemple un moteur électrique est prévu pour le moyen de transport de l'emplacement de stockage et/ou **en ce que** le moyen de transport possède un point de couplage d'énergie tel un prise électrique, un boulon d'entrainement ou une roue d'entrainement pouvant être mis en interaction pour transmission de forces en particulier avec des moyens de commande au niveau du chariot de transport de marchandise.
